# EUROPÄISCHE PATENTSCHRIFT

(11) **EP 3 925 590 B1**
(45) Veröffentlichungstag und Bekanntmachung des Hinweises auf die Patenterteilung: **08.01.2025**
(21) Anmeldenummer: 20180292.3
(22) Anmeldetag: 16.06.2020
(51) Int. Cl.: A61J 1/03, A61J 7/00, B65B 5/10, B65D 75/36, G07F 17/00

(54) **VORRATSBEHÄLTER FÜR EINE VORRATS- UND ABGABESTATION**
STORAGE CONTAINER FOR A STORAGE AND DISPENSING STATION
RÉCIPIENT DE STOCKAGE POUR UNE STATION DE DISTRIBUTION ET DE STOCKAGE

(43) Veröffentlichungstag der Anmeldung: 22.12.2021
(73) Patentinhaber: Becton Dickinson Rowa Germany GmbH, 53539 Kelberg (DE)
(72) Erfinder: RISCH, Thomas, 54552 Sarmersbach (DE)
(74) Vertreter: Zenz Patentanwälte Partnerschaft mbB

(56) Entgegenhaltungen:
- EP-A1- 2 962 956
- EP-B1- 2 962 956
- US-A1- 2002 195 459
- US-A1- 2018 221 246

## Beschreibung

Die vorliegende Erfindung betrifft einen Vorratsbehälter für eine Vorrats- und Abgabestation für Kleinstückgüter, insbesondere Arzneimittel oder Nahrungsergänzungsprodukte.

Moderne Blisterautomaten, wie sie beispielsweise in der WO 2013/034504 A1 offenbart sind, umfassen, je nach Ausbaustufe, mehrere hundert Vorrats- und Abgabestationen. In diesen sind jeweils eine Mehrzahl von Arzneimittelportionen eines bestimmten Arzneimittels gelagert, und auf Anforderung können einzelne Arzneimittelportionen abgegeben werden. Mit dem Blisterautomaten werden die in den Vorrats- und Abgabestationen gelagerten Arzneimittelportionen patientenindividuell gemäß den ärztlich verordneten Eingabezeitpunkten zusammengestellt und verblistert.

Zur Zusammenstellung der Arzneimittelportionen werden entsprechende Vorrats- und Abgabestationen zur Abgabe einer oder mehrerer Arzneimittelportionen angesteuert. Bei der Ansteuerung einer Vorrats- und Abgabestation wird mit einer Vereinzelungseinrichtung, die in dem Vorratsbehälter der Vorrats- und Abgabestation angeordnet ist, eine einzelne Arzneimittelportion separiert und über eine Abgabeöffnung in dem Vorratsbehälter einer Führungseinrichtung des Blisterautomaten übergeben. Mittels der Führungseinrichtung wird eine abgegebene Arzneimittelportion, gegebenenfalls unter Zwischenschaltung einer Sammeleinrichtung, einer Verpackungseinrichtung zugeführt, welche einzelne oder mehrere Arzneimittelportionen entsprechend einer ärztlichen Vorgabe verblistert.

Zur Vereinzelung der Arzneimittelportionen, die in einem Vorratsbehälter einer Vorrats- und Abgabestation gelagert sind, umfasst die Vereinzelungseinrichtung eine Mehrzahl von Kanälen, die üblicherweise am Außenumfang eines Grundkörpers der Vereinzelungseinrichtung angeordnet sind. Die Kanäle müssen an die jeweils zu vereinzelnden Arzneimittelportionen hinsichtlich ihrer Abmessungen derart angepasst werden, dass in einem Kanal die Arzneimittelportionen lediglich übereinander, nicht aber nebeneinander angeordnet sein können. Die Kanäle können beispielsweise derart bemessen sein, dass in einem Kanal lediglich eine Arzneimittelportion aufgenommen werden kann.

Zur Abgabe einer Arzneimittelportion aus einem Kanal wird ein Kanal über die Abgabeöffnung in der Bodenfläche des Gehäuses des Vorratsbehälters bewegt, und die in dem Kanal (an unterster Stelle) angeordnete Arzneimittelportion rutscht beziehungsweise fällt schwerkraftbedingt in die Abgabeöffnung. Um zu vermeiden, dass weitere in dem oder über dem Kanal lagernde Arzneimittelportionen ebenfalls abgegeben werden, also eine unbekannte Anzahl von Arzneimittelportionen abgegeben wird, ist in dem Bereich über der Abgabeöffnung ein Rückhalteabschnitt eines Rückhaltemittels bzw. Separators zumindest in oder über dem Kanal geführt beziehungsweise angeordnet, der an der Abgabeöffnung ausgerichtet ist. Der Rückhalteabschnitt ist in Bezug auf die Höhe des Kanals derart in diesem oder über diesem angeordnet, dass unter dem Rückhalteabschnitt lediglich eine Arzneimittelportion angeordnet sein kann. Sofern der Rückhalteabschnitt in den Kanal geführt ist, um die unterste Arzneimittelportion von darüber angeordneten zu trennen, weisen einzelne Kanäle separierende Vorsprünge einen Schlitz auf, welcher den Rückhalteabschnitt aufnimmt. Sofern der Rückhalteabschnitt über den Kanälen angeordnet beziehungsweise geführt ist, ist dieser regelmäßig nur geringfügig über den oberen Enden der Vorsprünge geführt, so dass vermieden wird, dass bei Abgabe der Arzneimittelportion weitere Arzneimittelportionen in den Kanal gelangen.

Wie oben dargelegt, wird eine Arzneimittelportion vereinzelt, indem ein Kanal über die Abgabeöffnung gedreht wird. Die (üblicherweise eine) in dem Kanal (oder unteren Kanalabschnitt) angeordnete Arzneimittelportion fällt schwerkraftbedingt aus dem Kanal(-abschnitt). In einigen Fällen, insbesondere wenn leichte und/oder Arzneimittelportionen mit großflächig an der Kanalwandung anliegenden Außenflächen vereinzelt werden sollen, kommt es aber vor, dass die Schwerkraft nicht ausreicht, um eine Abgabe durch die Abgabeöffnung zu initiieren - bedingt durch elektrostatische Anziehung zwischen Arzneimittelportion und Kanalwandung bleibt diese in dem Kanal hängen, der Kanal wird bei der vermeintlichen Abgabe über die Abgabeöffnung weggedreht, ohne dass die Arzneimittelportion abgegeben wird. Dies führt zu fehlerhaften Arzneimittelzusammenstellungen. Ein Vorratsbehälter, bei dem dieses Problem auftreten kann, ist beispielsweise in der EP 2 962 956 A1 offenbart.

Es ist Aufgabe der vorliegenden Erfindung, einen Vorratsbehälter für eine Vorrats- und Abgabestation für Kleinstückgüter bereitzustellen, bei welchem fehlerhafte Arzneimittelabgaben durch ein Hängenbleiben einer Arzneimittelportion an einer Grundfläche der Vereinzelungseinrichtung vermieden wird.

Diese Aufgabe wird gelöst durch einen Vorratsbehälter nach Anspruch 1. Der erfindungsgemäße Vorratsbehälter für eine Vorrats- und Abgabestation für Kleinstückgüter umfasst ein einen Aufnahmeraum für Kleinstückgüter umschließendes Gehäuse mit einem innen kreiszylinderförmigen Abschnitt und einer eine Abgabeöffnung aufweisenden Gehäuse-Bodenfläche sowie eine in dem innen kreiszylinderförmigen Abschnitt des Gehäuses angeordnete Vereinzelungseinrichtung mit einem Grundkörper und mehreren Kanälen zur Aufnahme zumindest eines Kleinstückguts, wobei die Kanäle zum Außenumfang der Vereinzelungseinrichtung offen sind und von zwischen diesen an dem Grundkörper ausgebildeten Stegen definiert sind und wobei jeder Kanal eine Umfangswandung und zwei Radialwandungen aufweist, und mit einer der Gehäuse-Bodenfläche zugewandten Grundfläche, wobei die Grundfläche Abgabeöffnungen der Kanäle aufweist. Der Vorratsbehälter umfasst ferner ein Rückhaltemittel mit einem Positioniermittel und einem Rückhalteabschnitt, wobei das Positioniermittel den Rückhalteabschnitt über der Abgabeöffnung hält.

Erfindungsgemäß sind an der Grundfläche der Vereinzelungseinrichtung eine Mehrzahl von horizontalen radialen Nuten angeordnet, die zum Umfang der Vereinzelungseinrichtung hin offen gehalten sind, so dass die horizontalen radialen Nuten verhindern, dass sich eine Arzneimittelportion an der Grundfläche anhaftet und sich die elektrostatische Anziehung durch die verminderte Kontaktfläche vermindert.

Bei einer Ausführungsform weist auch eine Radialwandung und/oder die Umfangswandung zur Verminderung einer Kontaktfläche zwischen Kleinstückgut und Kanalwandung eine Vertiefung und/oder Erhebung auf, wobei deren Form und Größe derart gewählt ist, dass eine elektrostatische Anziehung zwischen Kleinstückgütern und Kanalwandung vermindert ist.

Es wird von Vertiefungen und/oder Erhebungen gesprochen, da bei einer ebenen Grundfläche stets das eine das andere bedingt - wenn die Vertiefungen überwiegen, sind die Erhebungen das "herausragende" Merkmal, wenn die Erhebungen überwiegen, sind die Vertiefungen das herausragende Merkmal. Wesentlich ist, dass die Verminderung der Kontaktfläche zu einer verminderten elektrostatischen Anziehung führt, so dass ein Einziehen oder Anhaften von Arzneimittelportionen an der Grundfläche vermieden wird. Die Gestaltung der Vertiefungen/Erhebungen ist auch abhängig von der Form der zu vereinzelnden Arzneimittelportionen - wenn beispielsweise flache kreisförmige Arzneimittelportionen zu vereinzeln sind, sollten beispielweise Vertiefungen nicht so gewählt werden, dass die flache Arzneimittelportion mit dem flachen Abschnitt mehr oder weniger genau in eine Vertiefung passt. Eine Wahl der geeigneten Vertiefungen/Erhebungen ergibt sich für den Fachmann aber sofort aus der genauen Gestalt und weiteren Charakteristika der zu vereinzelnden Arzneimittelportionen. Es ist ferner selbstverständlich, dass die Vertiefungen/Erhebungen so zu wählen sind, dass deren Form keinen Schaden an den Arzneimittelportionen verursacht, wenn diese sich durch einen Kanal bewegen - es sind also insbesondere vorstehende Spitzen sowie scharfe Kanten zu vermeiden.

Die Verminderung der Kontaktfläche vermindert eine mögliche elektrostatische Anziehung zwischen Kanalwandung und Arzneimittelportion, ein Hängenbleiben in einem Kanal findet nicht statt, die Arzneimittelportion fällt bei entsprechender Ausrichtung des Kanals schwerkraftgetrieben durch die Abgabeöffnung, eine fehlerhafte Abgabe von Arzneimittelportionen wird vermieden.

Darüber hinaus hat sich herausgestellt, dass die Vertiefungen und/oder Erhebungen nicht nur die elektrostatische Wechselwirkung zwischen Kanalwand und Arzneimittelportion vermindern, sondern auch die elektrostatische Aufladung der Arzneimittelportion selbst vermindert wird. Dies hat einen positiven Effekt im Hinblick auf den weiteren Weg der Arzneimittelportion durch den Blisterautomaten. Bei der Verwendung üblicher Vorratsbehälter kann es aufgrund der elektrostatischen Aufladung der Arzneimittelportionen vorkommen, dass diese zwar nicht in einem Kanal, wohl aber in einem stromab angeordneten Bauteil des Blisterautomaten, wie beispielsweise einer Führungseinrichtung zum Leiten von Arzneimittelportionen in eine Sammeleinrichtung, hängen bleiben. Auch dies kann zu fehlerhaften Arzneimittelzusammenstellungen führen. Die verminderte elektrostatische Aufladung der Arzneimittelportion vermindert auch das Risiko eines Anhaftens in stromab gelegenen Bauteilen, die Gefahr einer Fehlabgabe ist weiter gemindert.

Bei einer besonders einfach herzustellenden bevorzugten Ausführungsform ist es vorgesehen, dass Vertiefungen (zumindest teilweise) als horizontale Nuten ausgebildet sind. Alternativ oder zusätzlich ist es bei einer weiteren bevorzugten Ausführungsform vorgesehen, dass Vertiefungen als vertikale Nuten ausgebildet sind.

Aufgrund der Tatsache, dass bei der Vereinzelung Arzneimittelabrieb entsteht, ist eine regelmäßige Reinigung der Vereinzelungseinrichtung notwendig. Eine Reinigung ist unabhängig von der Kontaminierung mit Arzneimittelabrieb auch dann notwendig, wenn eine andere Arzneimittelart mit dem Vorratsbehälter vereinzelt werden soll - wie bereits oben dargelegt, ist es aufgrund der notwenigen Anpassung der Kanäle an die Form und Gestalt der Arzneimittelportionen notwendig, eine Vereinzelungseinrichtung an die zu vereinzelnden Arzneimittelportionen anzupassen. Bei einer bevorzugten Ausführungsform, die besonders einfach gründlich gereinigt werden kann, ist es vorgesehen, dass die vertikalen Nuten zu den Abgabeöffnungen der Kanäle offen ausgebildet sind. Die nach unten offene Ausgestaltung hat ferner den Vorteil, dass sich kein Arzneimittelabrieb in der Vertiefung bzw. Nut ansammelt - so wird vermieden, dass bei Ausrichtung eines Kanals an der Abgabeöffnung eine größere Ansammlung an Arzneimittelabrieb aus einer Nut über die Abgabeöffnung abgegeben wird.

Wie oben dargelegt, können die Stege einen Schlitz aufweisen, welcher die Stege und die Kanäle in untere und obere Abschnitte teilt. Der Rückhalteabschnitt des Rückhaltemittels wird dann in dem Schlitz geführt. Ob eine "zweiteilige" oder einteile Ausführung der Stege/Kanäle gewählt wird, hängt insbesondere von der Geometrie der Arzneimittelart ab. Insbesondere bei nicht kugelsymmetrischen Arzneimittelportionen, beispielsweise in Kapselform, ist die Verwendung von zweiteiligen (und damit längeren) Kanälen sinnvoll, da die längeren Kanäle einer zu vereinzelnden Arzneimittelportion mehr Zeit zur Verfügung stellen, sich in dem Kanal auszurichten, was wiederrum die Fehlerrate bei der Abgabe vermindert.

Die oberen Kanalabschnitte öffnen sich zu dem Aufnahmeraum für Arzneimittelportionen, es drücken also regelmäßig Arzneimittelportionen von oben nach. Wenn ein Aufnahmeraum für Arzneimittelportionen aber fast leergelaufen ist, fehlt dieser Druck von weiteren Arzneimittelportionen. Bei den unteren Kanalabschnitten verhält es sich dann genauso, wenn diese über die Abgabeöffnung gedreht werden - der Rückhalteabschnitt separiert die Abschnitte, ein Nachdrücken von oben findet im Moment der Abgabe nicht statt, ein Hängenbleiben kann nicht ausgeschlossen werden.

Um bei einer Vereinzelungseinrichtung mit geteilten Stegen bzw. Kanälen auch bei fast leergelaufenem Aufnahmeraum ein Hängenbleiben bzw. Anhaften im unteren wie oberen Kanalabschnitt zu vermeiden, ist es bei einer bevorzugten Ausführungsform, bei welcher die Stege einen horizontalen Schlitz aufweisen, welcher diese in einen oberen und einen unteren Stegabschnitt und die Kanäle in obere und untere Kanalabschnitte teilt, vorgesehen, dass die Vertiefungen und/oder Erhebungen in zumindest einer Radialwandung und/oder einer Umfangswandung des unteren und oberen Kanalabschnitts angeordnet sind.

Im Nachfolgenden werden ein beispielhafter Vorratsbehälter und bevorzugte Ausführungsformen des erfindungsgemäßen Vorratsbehälters anhand der beigefügten Zeichnung beschrieben, in welcher
Figuren 1a - 1c verschiedene Schrägansichten eines beispielhaften Vorratsbehälters zeigen,
Figur 2 eine Draufsicht des beispielhaften Vorratsbehälters zeigt,
Figuren 3a und 3b Schnittansichten des beispielhaften Vorratsbehälters zeigen, wobei bei Figur 3b das Innere der Vereinzelungseinrichtung veranschaulicht ist,
Figuren 4a und 4b Schrägansichten einer Kombination Vereinzelungseinrichtung/Rückhaltemittel bei einer ersten bevorzugten Ausführungsform zeigen,
Figur 5 eine Schrägansicht einer Kombination Vereinzelungseinrichtung/Rückhaltemittel bei einer zweiten Ausführungsform zeigt,
Figur 6 eine Schrägansicht einer Kombination Vereinzelungseinrichtung/Rückhaltemittel bei einer dritten Ausführungsform zeigt,
Figur 7 eine Schrägansicht einer Kombination Vereinzelungseinrichtung/Rückhaltemittel der ersten Ausführungsform zeigt, und
Figur 8 eine Detailansicht eines Abschnittes aus Figur 7 zeigt.

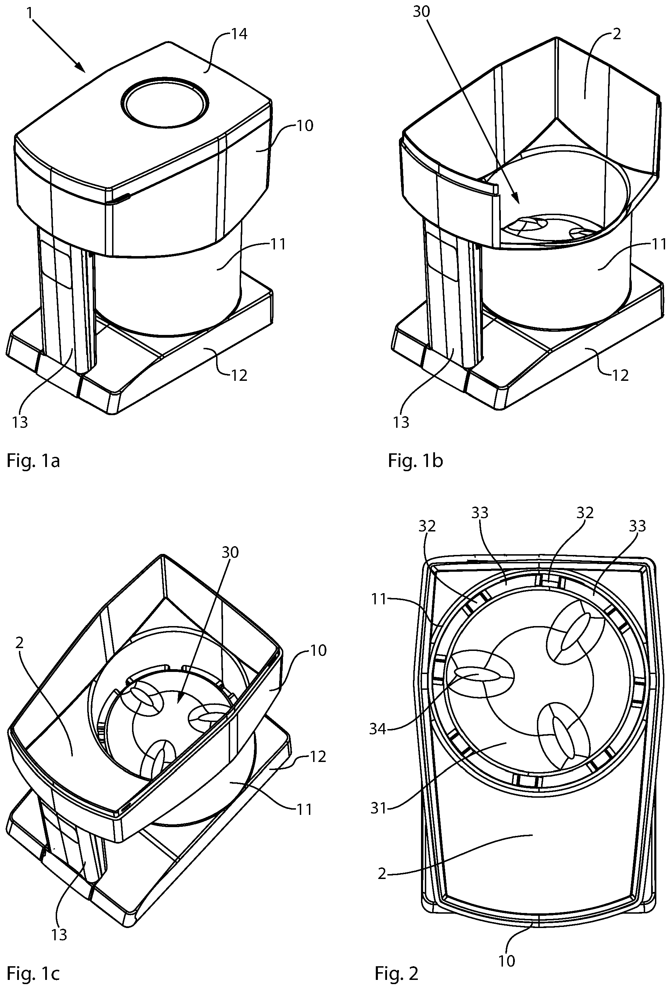

Figuren 1a - 1c zeigen verschiedene Schrägansichten eines beispielhaften Vorratsbehälters. Der Vorratsbehälter 1 umfasst ein einen Aufnahmeraum 2 für Arzneimittelportionen umschließendes Gehäuse 10, welches im unteren Abschnitt einen innen kreiszylinderförmigen Abschnitt 11 aufweist. Der Vorratsbehälter 1 umfasst ferner eine Grundplatte 12 und einen Deckel 14, der während des Betriebes der Vorrats- und Abgabestation auf dem Gehäuse 10 angeordnet ist und für ein Nachfüllen abgenommen werden kann. Um den Vorratsbehälter 1 besser händeln zu können, umfasst dieser im "vorderen" Bereich einen Griff 13. Wie dies insbesondere in Figur 1c zu erkennen ist, ist in dem innen kreiszylinderförmigen Abschnitt 11 eine Vereinzelungseinrichtung 30 mit einem Grundkörper 31 angeordnet.

In Figur 2 ist zu erkennen, dass bei dem gezeigten Beispiel auf dem Grundkörper 31 drei Vorsprünge 34 angeordnet sind, die für eine Bewegung der Arzneimittelportionen innerhalb des Aufnahmeraums sorgen und somit ein Gleiten von Arzneimittelportionen in Kanäle 32 fördern. Die Kanäle 32 sind zum Außenumfang der Vereinzelungseinrichtung offen ausgebildet und durch eine Mehrzahl von Stegen 33, die an dem Grundkörper der Vereinzelungseinrichtung angeordnet sind, definiert. Die Stege selbst können angesetzt sein, sie können aber auch ausgebildet werden, indem die Kanäle 32 ausgefräst werden. Wie dies in nachfolgenden Figuren erkennbar wird, sind bei der ersten Ausführungsform sowohl die Kanäle als auch die Stege durch einen Schlitz in untere und obere Abschnitte geteilt.

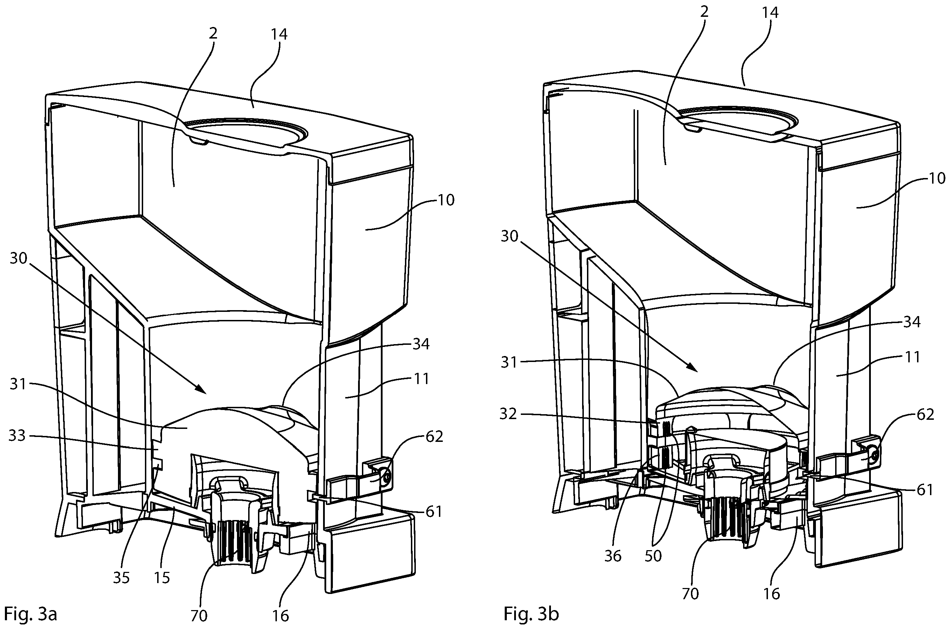

Figuren 3a und 3b zeigen Schnittansichten des beispielhaften Vorratsbehälters, wobei bei Figur 3b das Innere der Vereinzelungseinrichtung erkennbar ist. Wie dies in Figuren 3a und 3b zu erkennen ist, wird die Vereinzelungseinrichtung 30 über das Kopplungsmittel 70 in dem kreiszylinderförmigen Abschnitt 11 gehalten. Wie oben bereits angedeutet, sind die Stege 33 durch einen Schlitz 35 in untere und obere Abschnitte geteilt, was in nachfolgenden Figuren detaillierter beschrieben ist. In den Figuren 3a und 3b ist ferner angedeutet, dass ein Rückhalteabschnitt 61 eines Rückhaltemittels über einen Schlitz in dem kreiszylinderförmigen Abschnitt 11 des Gehäuses in den Schlitz 35 geführt ist und in diesem stets an der Abgabeöffnung 16 ausgerichtet gehalten ist. Dies bewirkt, dass der Rückhalteabschnitt bei der gezeigten Ausführungsform stets über einer Abgabeöffnung eines Kanalabschnittes gehalten ist, der über die Abgabeöffnung gedreht ist. Ein Eintritt von weiteren Arzneimittelportionen in den unteren Kanalabschnitt ist nicht möglich, auch wenn in dem unteren Abschnitt des ausgerichteten Kanals keine Arzneimittelportion mehr vorhanden ist. Durch diese Ausrichtung des Rückhalteabschnittes können stets nur so viele Arzneimittelportionen aus dem unteren Abschnitt des ausgerichteten Kanals in die Abgabeöffnung übergehen, wie in dem Kanalabschnitt angeordnet sind - üblicherweise sind die Kanäle derart an die Arzneimittelportionen angepasst, dass in jedem Kanalabschnitt lediglich eine Arzneimittelportion angeordnet ist. Der Rückhalteabschnitt 61 des Rückhaltemittels ist über ein Positioniermittel 62 gehalten, wobei dieses bei der gezeigten Ausführungsform außen an dem Gehäuse befestigt ist. Wie genau das Rückhaltemittel konstruiert und angeordnet ist, ist für die vorliegende Erfindung jedoch unerheblich.

Bei Figur 3b ist bereits angedeutet, dass bei einer Umfangswandung 36 eines unteren und oberen Kanalabschnitts drei vertikale Vertiefungen bzw. Nuten 50 angeordnet sind, die bei der gezeigten Ausführungsform im unteren Kanalabschnitt unten offen ausgebildet sind, was die Reinigung und Einbringung der Nuten vereinfacht. Durch die Einbringung der Nuten wird die Kontaktfläche zwischen einer ggf. in dem Kanalabschnitt angeordneten Arzneimittelportion und der Kanalwandung vermindert, was wiederrum die elektrostatische Anziehung zwischen der Wandung des Kanalschnitts und einer Arzneimittelportion vermindert, wodurch ein Hängenbleiben in dem Kanalabschnitt vermieden wird (wenn dieser über die Abgabeöffnung 16 gedreht wird). Wie bereits weiter oben dargelegt, wird auch die elektrostatische Aufladung der durch den Kanal gleitenden Arzneimittelportion vermindert, was auch die Gefahr eines Hängenbleibens in einem Bauteil stromab vermindert.

Wie bereits oben dargelegt, werden mit den Vorratsbehältern verschiedene Arzneimittelarten vereinzelt, und dies macht es sinnvoll, Art und Weise der Verminderung der Kontaktfläche zwischen Arzneimittelportion und Kanalwandung der Arzneimittelart anzupassen. Bei der in Figur 3b gezeigten Ausführungsform sind drei Nuten in der Umfangswandung 36 des Kanalabschnitts angeordnet, also der "breiten" Wand des Kanalabschnitts (siehe dazu Figur 2). Eine entsprechende Konfiguration ist insbesondere bei runden, flachen Arzneimittelportionen sinnvoll, die eine große potenzielle Kontaktfläche Arzneimittelportion/Umfangswandung haben können. Bei anderen Formen von Arzneimittelportionen, beispielsweise länglichen schmalen Formen, kann es sinnvoll sein, andere Konfigurationen zu wählen. Im nachfolgenden werden kurz drei weitere Ausführungsformen beschrieben, bevor noch einmal die Vereinzelungseinrichtung der erste Ausführungsform diskutiert wird.

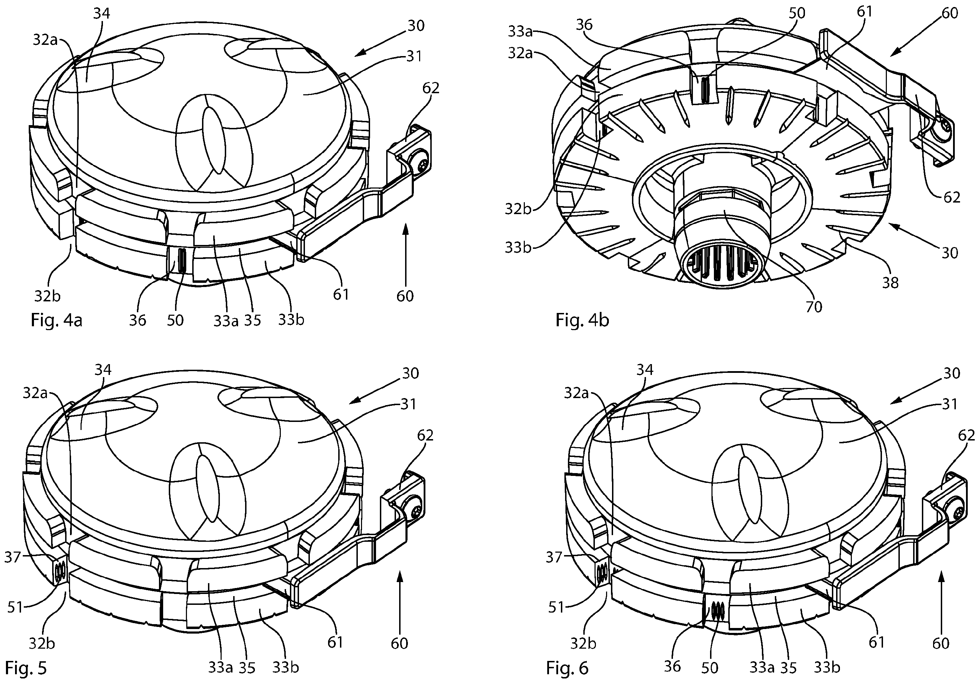

Figuren 4a und 4b zeigen eine Kombination aus Vereinzelungseinrichtung/Rückhaltemittel einer ersten Ausführungsform. Bei den Figuren kann man gut erkennen, dass die Kanäle 32 und die Stege 33 durch einen Schlitz 35 in obere und untere Kanalabschnitte 32a, 32b und obere und untere Stegabschnitte 33a, 33b geteilt sind. In dem Schlitz ist der Rückhalteabschnitt 61 des Rückhaltemittels 60 angeordnet. Wie es bei vorherigen Figuren beschrieben war, wird der Rückhalteabschnitt 61 über der (nicht dargestellten) Abgabeöffnung gehalten, so dass vermieden wird, dass bei dem an der Abgabeöffnung ausgerichteten Kanal Arzneimittelportionen von dem oberen Kanalabschnitt 32a in den unteren Kanalabschnitt 32b fallen. Bei der Ausführungsform gemäß Figuren 4a und 4b sind zwei Vertiefungen 50 in der Umfangswandung 36 des Kanals (in diesem Fall des unteren Kanalabschnitts) angeordnet. Bei Figur 4b ist ferner zu erkennen, dass an der Grundfläche der Vereinzelungseinrichtung eine Mehrzahl von horizontalen radialen Nuten 38 angeordnet sind, die zum Umfang der Vereinzelungseinrichtung hin offen gehalten sind. Diese horizontalen radialen Nuten verhindern, dass sich eine Arzneimittelportion an der Grundfläche anhaftet - auch in diesem Falle ist die elektrostatische Anziehung durch die verminderte Kontaktfläche vermindert. Eine Konfiguration mit lediglich zwei Vertiefungen kann beispielsweise gewählt werden, wenn die zu vereinzelnde Arzneimittelportion zwar schwerer als bei Ausführungsform eins ist, aber immer noch eine so starke elektrostatische Anziehung herrscht, dass die Arzneimittelportionen ohne die Vertiefungen nicht schwerkraftbedingt abgegeben würde.

Figur 5 zeigt eine zweite Ausführungsform, bei der die Vertiefungen nicht in der Umfangswandung eines Kanalabschnitts angeordnet sind. In Anpassung an die Form der zu vereinzelnden Arzneimittelportion sind bei dieser Ausführungsform drei Vertiefungen 51 in einer Radialwandung 37 des unteren Kanalabschnitts 32b angeordnet. Eine solche Konfiguration macht dann Sinn, wenn die Kontaktfläche zwischen Arzneimittelportion und Radialwandung größer als die zur Umfangswandung eines Kanalabschnitts ist.

Figur 6 zeigt eine dritte Ausführungsform, bei der sowohl in der Umfangswandung 36 Vertiefungen 50 als auch in einer Radialwandung 37 Vertiefungen 51 angeordnet sind.

Wie bereits erwähnt, sind bei den vorgenannten Ausführungsformen keine Vertiefungen in den oberen Kanalabschnitten 32a notwendig, da bei diesen die überliegenden Arzneimittelportionen für einen ausreichenden Druck sorgen und so für ein Nachrutschen in einen freien Kanalabschnitt sorgen (wenn eine Arzneimittelportion abgegeben und die Vereinzelungseinrichtung weitergedreht wird). Anhand der zuvor beschriebenen Ausführungsformen ist ersichtlich, dass man die Vertiefungen/Erhebungen genau an die zu vereinzelnde Arzneimittelportionen anpassen kann. Wenn lediglich eine oder zwei z. B. Vertiefungen notwendig sind, ist deren Einbringung natürlich günstiger als es beispielsweise bei der in Figur 6 gezeigten Ausführungsform der Fall ist. Man hat also die Möglichkeit, die Vereinzelungseinrichtung "maßzuschneidern".

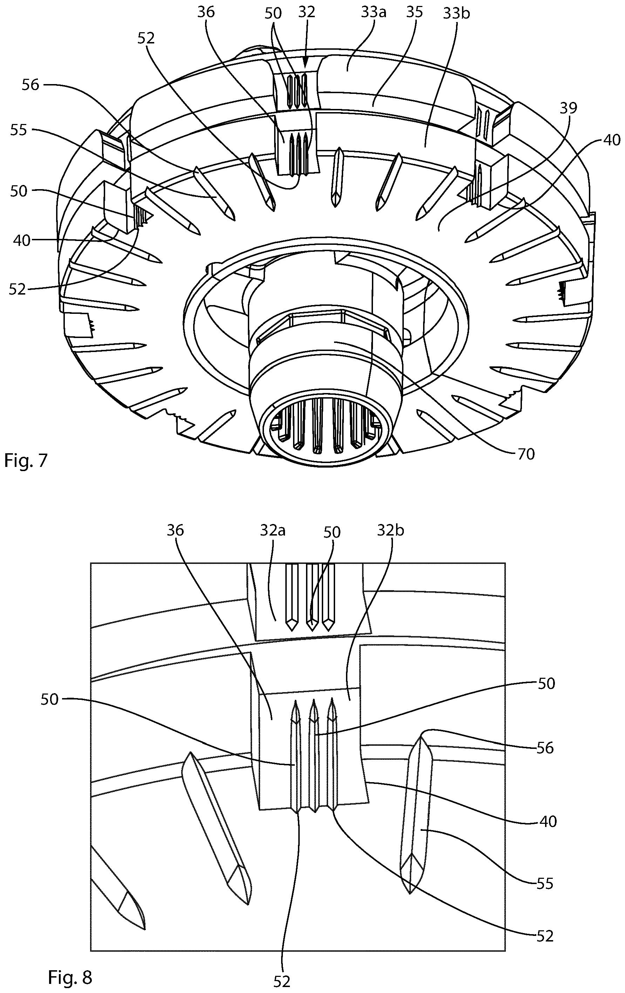

Figur 7 zeigt noch einmal eine Schrägansicht der Vereinzelungseinrichtung gemäß der ersten Ausführungsform. Bei der ersten Ausführungsform ist der Kanal in einen unteren und einen oberen Kanalabschnitt getrennt, wobei in beiden Kanalabschnitten Vertiefungen vorgesehen sind. Wie bei dieser vergrößerten Ansicht gut erkennbar, sind die Vertiefungen 50 in dem unteren Kanalabschnitt hin zu der Grundfläche der Vereinzelungsöffnung bzw. der Abgabeöffnung 40 des Kanals bzw. Kanalabschnitts offen, haben also Austrittsöffnungen 52 - eine Detailansicht dazu ist in Figur 8 gezeigt. Diese Austrittsöffnungen vermeiden, dass sich Arzneimittelabrieb in den Vertiefungen ansammelt - der Arzneimittelabrieb kann kontinuierlich aus den Vertiefungen fallen, es wird also vermieden, dass eine große Menge Arzneimittelabrieb durch die Austrittsöffnungen abgegeben wird. Darüber hinaus vereinfachen die Austrittsöffnungen die Reinigung und die Einbringung der Nuten.

In Figur 7 sind ferner die radialen Nuten 55 in der Grundfläche 39 der Vereinzelungseinrichtung gut zu erkennen. Auch diese sind mit einer Austrittsöffnung 56 ausgebildet, allerdings öffnet sich diese zum Umfang der Vereinzelungseinrichtung. Die Funktion dieser Nuten wurde bereits weiter oben beschrieben. Schließlich ist in Figur 7 das Kopplungsmittel 70 dargestellt, mit welchem die Vereinzelungseinrichtung 30 mit einer (nicht dargestellten) Motoreinheit der Vorrats- und Abgabestation gekoppelt werden kann. Über die Motoreinheit kann die Vorrats- und Abgabestation an dem Blisterautomaten lösbar befestigt werden.

## Patentansprüche

1. Vorratsbehälter (1) für eine Vorrats- und Abgabestation für Kleinstückgüter, aufweisend:
ein einen Aufnahmeraum (2) für Kleinstückgüter umschließendes Gehäuse (10) mit einem innen kreiszylinderförmigen Abschnitt (11) und einer eine Abgabeöffnung (16) aufweisenden Gehäuse-Bodenfläche (15),
eine in dem innen kreiszylinderförmigen Abschnitt (11) des Gehäuses (10) angeordnete Vereinzelungseinrichtung (30) mit einem Grundkörper (31) und mehreren Kanälen (32) zur Aufnahme zumindest eines Kleinstückguts, wobei die Kanäle (32) zum Außenumfang der Vereinzelungseinrichtung offen sind und von zwischen diesen an dem Grundkörper (31) ausgebildeten Stegen (33) definiert sind und wobei jeder Kanal (32) eine Umfangswandung (36) und zwei Radialwandungen (37) aufweist, und mit einer der Gehäuse-Bodenfläche (15) zugewandten Grundfläche (39), wobei die Grundfläche (39) Abgabeöffnungen (40) der Kanäle (32) aufweist, und
ein Rückhaltemittel (60) mit einem Positioniermittel (62) und einem Rückhalteabschnitt (61), wobei das Positioniermittel (62) den Rückhalteabschnitt (61) über der Abgabeöffnung (16) hält,
**dadurch gekennzeichnet, dass** an der Grundfläche der Vereinzelungseinrichtung eine Mehrzahl von horizontalen radialen Nuten (38) angeordnet sind, die zum Umfang der Vereinzelungseinrichtung hin offen gehalten sind, so dass die horizontalen radialen Nuten (38) verhindern, dass sich eine Arzneimittelportion an der Grundfläche anhaftet und sich die elektrostatische Anziehung durch die verminderte Kontaktfläche vermindert.

2. Vorratsbehälter (1) für eine Vorrats- und Abgabestation für Kleinstückgüter nach Anspruch 1, **dadurch gekennzeichnet, dass** zumindest eine Radialwandung (37) und/oder die Umfangswandung (36) zur Verminderung einer Kontaktfläche zwischen Kleinstückgut und Kanalwandung (36, 37) eine Vertiefung und/oder Erhebung (50, 51) aufweist, wobei deren Form und Größe derart gewählt ist, dass eine elektrostatische Anziehung zwischen Kleinstückgütern und Kanalwandung (36, 37) vermindert ist.

3. Vorratsbehälter (1) für eine Vorrats- und Abgabestation für Kleinstückgüter nach Anspruch 2, **dadurch gekennzeichnet, dass** Vertiefungen (50, 51) als horizontale Nuten ausgebildet sind.

4. Vorratsbehälter (1) für eine Vorrats- und Abgabestation für Kleinstückgüter nach Anspruch 2 oder 3, **dadurch gekennzeichnet, dass** Vertiefungen (50, 51) als vertikale Nuten ausgebildet sind.

5. Vorratsbehälter (1) für eine Vorrats- und Abgabestation für Kleinstückgüter nach Anspruch 4, **dadurch gekennzeichnet, dass** die vertikalen Nuten zu den Abgabeöffnungen (40) der Kanäle (32) offen ausgebildet sind.

6. Vorratsbehälter (1) für eine Vorrats- und Abgabestation für Kleinstückgüter nach einem der Ansprüche 2 - 5, wobei die Stege (33) einen horizontalen Schlitz (35) aufweisen, welcher diese in einen oberen und einen unteren Stegabschnitt (33a, 33b) und die Kanäle in obere und untere Kanalabschnitte (32a, 32b) teilen, **dadurch gekennzeichnet, dass** die Vertiefungen und/oder Erhebungen (50, 51) in zumindest einer Radialwandung (37) und/oder einer Umfangswandung (36) des unteren und oberen Kanalabschnitts (32b, 32a) angeordnet sind.

## Claims

1. A storage container (1) for a storage and dispensing station for small piece goods, comprising:
a housing (10) enclosing a receiving space (2) for small piece goods including an on the inside circular cylindrical section (11) and a housing bottom surface (15) having a dispensing opening (16),
a separating device (30) arranged in the on the inside circular cylindrical section (11) of the housing (10) including a base body (31) and a plurality of channels (32) for receiving at least one small piece good, the channels (32) being open to the outer periphery of the separating device and being defined by webs (33) formed between these on the base body (31), and each channel (32) having a peripheral wall (36) and two radial walls (37), and including a base area (39) facing the housing bottom surface (15), the base area (39) having dispensing openings (40) of the channels (32), and
a retaining means (60) including a positioning means (62) and a retaining section (61), the positioning means (62) holding the retaining section (61) over the dispensing opening (16),
**characterized in that** a plurality of horizontal radial grooves (38) are arranged on the base area of the separating device, which are kept open towards the periphery of the separating device, so that the horizontal radial grooves (38) prevent a drug portion from adhering to the base area and the electrostatic attraction is reduced by the reduced contact area.

2. The storage container (1) for a storage and dispensing station for small piece goods according to claim 1, **characterized in that** at least one radial wall (37) and/or the peripheral wall (36) has a depression and/or elevation (50, 51) to reduce a contact area between small piece good and channel wall (36, 37), the shape and size of which is selected in such a way that an electrostatic attraction between small piece goods and channel wall (36, 37) is reduced.

3. The storage container (1) for a storage and dispensing station for small piece goods according to claim 2, **characterized in that** depressions (50, 51) are designed as horizontal grooves.

4. The storage container (1) for a storage and dispensing station for small piece goods according to claim 2 or 3, **characterized in that** depressions (50, 51) are designed as vertical grooves.

5. The storage container (1) for a storage and dispensing station for small piece goods according to claim 4, **characterized in that** the vertical grooves are designed to be open to the dispensing openings (40) of the channels (32).

6. The storage container (1) for a storage and dispensing station for small piece goods according to one of claims 2-5, wherein the webs (33) have a horizontal slot (35), which divides the webs into an upper and a lower web section (33a, 33b) and the channels into upper and lower channel sections (32a, 32b), **characterized in that** the depressions and/or elevations (50, 51) are arranged in at least one radial wall (37) and/or one peripheral wall (36) of the lower and upper channel section (32b, 32a).

## Revendications

1. Réservoir de stockage (1) pour une station de stockage et de distribution de petits articles, présentant :
un boîtier (10) entourant un espace de réception (2) pour les petits articles, avec une section cylindrique circulaire intérieure (11) et une surface de fond du boîtier (15) présentant une ouverture de distribution (16),
un dispositif de séparation (30) disposé dans la section cylindrique circulaire intérieure (11) du boîtier (10), avec un corps de base (31) et plusieurs canaux (32) pour recevoir au moins un petit article, les canaux (32) étant ouverts vers la périphérie extérieure du dispositif de séparation et étant définis par des entretoises (33) formées entre ceux-ci sur le corps de base (31), et chaque canal (32) présentant une paroi périphérique (36) et deux parois radiales (37), et avec une surface de base (39) tournée vers la surface de fond du boîtier (15), la surface de base (39) présentant des ouvertures de distribution (40) des canaux (32), et
un moyen de retenue (60) comprenant un moyen de positionnement (62) et une partie de retenue (61), le moyen de positionnement (62) maintenant la partie de retenue (61) au-dessus de l'ouverture de distribution (16),
**caractérisé en ce qu'**une pluralité de rainures radiales horizontales (38) sont disposées sur la surface de dispositif de séparation et sont maintenues ouvertes vers la périphérie du dispositif de séparation, de sorte que les rainures radiales horizontales (38) empêchent une portion de médicament d'adhérer à la surface de base et que l'attraction électrostatique est réduite par la surface de contact réduite.

2. Réservoir de stockage (1) pour une station de stockage et de distribution de petits articles selon la revendication 1, **caractérisé en ce qu'**au moins une paroi radiale (37) et/ou la paroi périphérique (36) présente un creux et/ou une bosse (50, 51) pour réduire une surface de contact entre les petits articles et la paroi du canal (36, 37), leur forme et leur taille étant choisies de telle sorte qu'une attraction électrostatique entre les petits articles et la paroi du canal (36, 37) soit réduite.

3. Réservoir de stockage (1) pour une station de stockage et de distribution de petits articles selon la revendication 2, **caractérisé en ce que** les creux (50, 51) sont conçus comme des rainures horizontales.

4. Réservoir de stockage (1) pour une station de stockage et de distribution de petits articles selon la revendication 2 ou 3, **caractérisé en ce que** les creux (50, 51) sont conçus comme des rainures verticales.

5. Réservoir de stockage (1) pour une station de stockage et de distribution de petits articles selon la revendication 4, **caractérisé en ce que** les rainures verticales sont ouvertes vers les ouvertures de distribution (40) des canaux (32).

6. Réservoir de stockage (1) pour une station de stockage et de distribution de petits articles selon l'une des revendications 2 à 5, dans lequel les entretoises (33) présentent une fente horizontale (35) qui les divise en une section d'entretoise supérieure et une section d'entretoise inférieure (33a, 33b) et diviser les canaux en sections de canal supérieure et inférieure (32a, 32b), **caractérisé en ce que** les creux et/ou les bosses (50, 51) sont disposés dans au moins une paroi radiale (37) et/ou une paroi périphérique (36) des sections de canal inférieure et supérieure (32b, 32a).
